Europäisches Patentamt

European Patent Office

Office européen des brevets

(11) Veröffentlichungsnummer: **0 211 383 B1**

# EUROPÄISCHE PATENTSCHRIFT

(45) Veröffentlichungstag der Patentschrift: **14.08.91**

(51) Int. Cl.5: **B01D 46/12**, B01D 46/44, F24F 3/16

(21) Anmeldenummer: **86110486.7**

(22) Anmeldetag: **29.07.86**

(54) Filtergerät.

(30) Priorität: **02.08.85 DE 3527732**

(43) Veröffentlichungstag der Anmeldung:
**25.02.87 Patentblatt 87/09**

(45) Bekanntmachung des Hinweises auf die Patenterteilung:
**14.08.91 Patentblatt 91/33**

(84) Benannte Vertragsstaaten:
**AT BE CH DE FR GB LI NL**

(56) Entgegenhaltungen:
**CH-A- 435 944**
**FR-A- 2 243 717**
**US-A- 3 936 284**
**US-A- 4 515 609**

(73) Patentinhaber: **ESTA Apparatebau GmbH & Co. KG**
**Gotenstrasse 2-4**
**W-7913 Senden-Ay(DE)**

(72) Erfinder: **Der Erfinder hat auf seine Nennung verzichtet**

(74) Vertreter: **Patentanwälte RUFF, BEIER und SCHÖNDORF**
**Neckarstrasse 50**
**W-7000 Stuttgart 1(DE)**

## Beschreibung

Die Erfindung betrifft ein Filtergerät für partikelhaltige Schmutzluft, insbesondere rauchhaltige Schmutzluft an Arbeitsplätzen, mit einem Grund-Gehäuse, einer Schmutzluft-Saugöffnung und einem mit dieser unter Zwischenschaltung eines einen Einlaß und einen Auslaß aufweisenden Sauggebläses über einen Strömungsweg verbundenen, nach außen führenden Abluft-Ausgang für die gefilterte Luft, wobei zwischen der Saugöffnung und dem Abluft-Ausgang mindestens ein Flächen-Filter und wenigstens ein weiterer, dem Flächen-Filter nachgeschalteter Filter vorgesehen ist.

Filtergeräte dieser Art, die insbesondere zur Absaugung und gefilterten Rückführung von rauch- und rußhaltiger Luft eingesetzt werden, werden beispielsweise bei Schweißarbeiten verwendet, um die Schmutzluft direkt von der im Schweißvorgang stehenden Stelle abzusaugen. Die hierbei anfallenden Filterrückstände führen meist zu einem relativ schnellen Verschmutzen der eingesetzten Filter, was je nach der verwendeten Filterart mit sich bringt, daß entweder der Durchgangswiderstand des Filters so erhöht wird, daß abrupt keine Absaugung mehr erfolgt oder daß nach einer gewissen Sättigung des Filters keine Filterung mehr erfolgt, sondern die Luft nahezu ungefiltert wieder austritt. Beide Fälle sind äußerst nachteilig sowohl hinsichtlich der Verschmutzung der Umgebung als auch hinsichtlich der damit verbundenen gesundheitlichen Gefährdungen.

Durch die US-A-3 936 284 ist ein Filtergerät bekanntgeworden, bei welchem der nachgeschaltete Filter eine Art Mikrofilter auf der Basis von Glasasbest ist und im wesentlichen in gleicher Höhe wie alle übrigen Filter liegt. Dadurch ist dieses Filtergerät kaum dafür geeignet, Schmutzluft zu filtern, die Flüssigkeiten bzw. kondensierende Dämpfe führt. Diese flüssigen bzw. zu Flüssigkeiten werdenden Medien würden sich nämlich auf dem Boden des Gerätegehäuses sammeln und, sofern sie nicht bereits den nachgeschalteten Filter gesättigt haben, durch Kapillarwirkung in diesem Filter nach oben steigen. Dadurch würde der nachgeschaltete Filter zwangsläufig naß werden und während des weiteren Betriebes auch nicht mehr trocknen können. Dies führt insbesondere bei besonders feinen Filtern sofort zu einer völligen Verstopfung oder, falls die Gebläseleistung entsprechend hoch ist, ggf. zu einem Durchreißen der Flüssigkeit durch den Filter, so daß diese Flüssigkeit dann mit der Luft durch die Auslaßöffnung zerstäubt in den Raum transportiert wird.

Der Erfindung liegt die Aufgabe zugrunde, ein Filtergerät der beschriebenen Art zu schaffen, das bei kleinen Abmessungen einerseits eine große Standzeit hat und andererseits das Unwirksamwerden des bzw. der Filter leicht erkennen läßt und damit einen deutlichen Hinweis auf eine erforderliche Filtererneuerung gibt.

Zur Lösung dieser Aufgabe ist ein Filtergerät der eingangs beschriebenen Art erfindungsgemäß dadurch gekennzeichnet, daß der nachgeschaltete Filter als Patronen-Filter mit einer Mehrzahl parallelgeschalteter bzw. parallel angeordneter Filterpatronen ausebildet ist und einen bodenseitigen Einlaß aufweist, der an einer Oberseite des auch als Geräte-Gehäuse bezeichneten Grund-Gehäuses vorgesehen ist, wobei ein Flächen-Filter durch Filtratverschmutzung schneller als der Patronen-Filter zusetzend ausgebildet ist. Ferner kann ein weiterer Gehäuseteil voresehen sein, der auch als Primärfilter-Gehäuse bezeichnet ist. Der Flächen-Filter, der als Vorfilter wirkt und beispielsweise so ausgelegt ist, daß er einen wesentlich kleineren Teil der abzufilternden Rückstände zurückhält als der Patronen-Filter, kann so ausgebildet sein, daß er im unverschmutzten und weniger verschmutzten Zustand einen sehr niedrigen Durchgangswiderstand hat, daß aber sein Durchgangswiderstand ab einem vorbestimmten höher liegenden Sättigungsgrad steil ansteigt; der Flächen-Filter ist dabei zweckmäßig im Verhältnis zum Patronen-Filter so abgestimmt, daß er seinen maximalen, nahe an einen völligen Durchgangsverschluß reichenden, Durchgangswiderstand erreicht, bevor der Patronen-Filter selbst völlig zugesetzt ist. Der Flächen-Filter, der beispielsweise etwa 20 % der abzufilternden Rückstände zurückhält, läßt sich einfach und unter geringen Kosten auswechseln, so daß die Standzeit der nachgeschalteten Filterpatronen wesentlich erhöht wird. Durch das Zusetzen des Flächen-Filters wird die Absaugung durch das Filtergerät vor Erreichen der Sättigung des Patronen-Filters allmählich so deutlich eingeschränkt, daß sich hieraus ein eindeutiger Hinweis auf die Notwendigkeit des Filterwechsels ergibt.

Der Patronen-Filter kann in einfacher Weise im Strömungsweg nach dem Auslaß des Sauggebläses angeordnet sein, wobei vorzugsweise zwischen dem Auslaß des Sauggebläses und dem Patronen-Filter ein Beruhigungsraum vorgesehen ist, durch den eine gleichmäßige Verteilung der den Patronen-Filter durchsetzenden Luft über dessen Einlaßfläche erreicht wird. Dadurch werden alle Filterpatronen weitestgehend gleichmäßig belastet.

Das Filtergerät kann besonders kompakt ausgebildet werden, wenn das Sauggebläse innerhalb des Geräte-Gehäuses, insbesondere innerhalb des im wesentlichen das gesamte Geräte-Gehäuse einnehmenden Beruhigungsraumes angeordnet ist und vorzugsweise ein Antriebsmotor des Sauggebläses vor Schmutzbeaufschlagung geschützt an der Außenseite des Geräte-Gehäuses liegt, wobei vorzugsweise der Gebläserotor an der Innenseite und der Antriebsmotor an der Außenseite einer aufrechten Wand des Geräte-Gehäuses achsgleich zueinander angeordnet sind.

Vorteilhaft ist von dem Einlaß des Sauggebläses ein Saugkanal freiliegend bzw. zentral durch den Beruhigungsraum zu einer gegenüberstehenden Einlaß-Wand des Geräte-Gehäuses sowie durch diese aus dem Geräte-Gehäuse geführt, während das Sauggebläse mit seinem durch mindestens eine Auslaßöffnung in einem Gebläse-Gehäuse gebildeten radialen Auslaß unmittelbar in das umgebende Geräte-Gehäuse mündet, so daß auch der Saugkanal zur Beruhigung der den Beruhigungsraum durchströmenden Luft beiträgt.

Der Patronen-Filter kann sehr raumsparend und mit großflächigem Einlaß angeordnet werden, wenn er im wesentlichen eine Seite des Geräte-Gehäuses überdeckend, insbesondere dessen Oberseite abdeckend angeordnet ist und wenn diese, einer Einlaßseite des Patronen-Filters zugehörige Seite des Geräte-Gehäuses vorzugsweise im wesentlichen auf voller Weite offen sowie mit einer Boden-Platte eines Patronenfilter-Gehäuses abgedeckt ist. Diese Boden-Platte weist zweckmäßig für jede der in einem Raster ebenengleich nebeneinander angeordneten Filterpatronen eine zentrale Filterpatronen-Einlaßöffnung auf.

Um die an beiden Enden offenen, hülsenförmigen Filterpatronen trotz günstiger Strömungs- bzw. Betriebsbedingungen leicht auswechseln zu können, sind sie mit ihren Stirnflächen zentriert zwischen zwei Platten eingespannt, von denen die eine mit Steckflanschen begrenzte Filterpatronen-Einlaßöffnungen aufweist und die gegenüberliegende als Verschluß-Platte für die zugehörigen offenen Hülsenenden der Filterpatronen ausgebildet ist. Die Filterpatronen, deren Hülsenenden meist durch ringwulstförmige Ringdichtungen gebildet sind, können somit durch Aufstecken auf die abgedichtet in sie eingreifenden ringförmigen Steckflansche und durch Festhalten mit der gegenüberliegenden Verschluß-Platte ohne jegliche weitere Befestigungsmittel freistehend und im Abstand voneinander sicher gehalten werden. Zweckmäßig sind diese beiden Platten-Außenwandungen der Patronenfilter-Gehäuses, dessen quer dazu liegende Wandungen den Abluft-Ausgang in Form von Abluft-Ausgangsöffnungen - wie Schlitzen o.dgl. aufweisen, so daß die gefilterte Abluft an allen quer zu den genannten Platten liegenden Wandungen des Patronenfilter-Gehäuses durch einen Abluft-Ausgang sehr großen Gesamtquerschnittes und damit mit geringer Strömungsgeschwindigkeit unmittelbar nach Verlassen des Patronen-Filters wieder ins Freie austreten kann. Die den Abluft-Ausgang aufweisenden Wandungen können beispielsweise durch Jalousiebleche gebildet sein, welche über den größten Teil ihrer Fläche mit rasterförmig verteilten Austrittsschlitzen versehen sind.

Dem Patronen-Filter kann jedoch noch mindestens ein Nach-Filter nachgeordnet sein, der zweckmäßig so ausgelegt ist, daß er unerwünschte gasförmige Bestandteile aus der Luft abfiltert, also beispielsweise solche gasförmigen Bestandteile, die durch Geruch wahrnehmbar sind. Ein solcher Nach-Filter ist zweckmäßig durch einen flächigen Aktivkohle-Filter gebildet, der vorzugsweise als Endfilter benachbart zu den Filterpatronen unmittelbar an der Innenseite der jeweiligen, die Abluft-Ausgangsöffnungen aufweisenden Außen-Wand des Patronenfilter-Gehäuses angeordnet ist. Dadurch können sehr großflächige, jedoch wenig Raum beanspruchende Nach-Filter mit geringem Durchgangswiderstand verwendet werden, die aufgrund der vorangegangenen Filterung nicht durch Schmutzpartikel belastet werden. Ist das Patronenfilter-Gehäuse in Ansicht auf die Filterpatronen quadratisch ausgebildet, so können an allen vier Außenwandungen gleiche Nach-Filter bzw. Nach-Filter gleicher Größe verwendet werden, was deren Lagerhaltung und Austausch wesentlich erleichtert.

Bei einer einfachen Ausführungsform liegt mindestens einer der Flächen-Filter zwischen dem Auslaß des Sauggebläses und dem Patronen-Filter, insbesondere mit geringem Abstand benachbart und/oder parallel zu dessen Einlaßseite, so daß alle Filter des Filtergerätes nahe beieinander und daher leicht zugänglich liegen. Unabhängig hiervon ist zweckmäßig mindestens ein Gerät, wie ein Signal-Gerät, zur Überwachung des Druckes im Strömungsweg unmittelbar vor und/oder hinter dem Flächen-Filter vorgesehen, wodurch die Anzeige des Verschmutzungsgrades des jeweiligen Filters noch wesentlich verdeutlicht werden kann. Das vor dem Flächen-Filter messende Druckmeß-Gerät zeigt anhand des im Beruhigungsraum ansteigenden Druckes die zunehmende Verschmutzung des Flächen-Filters an, während das hinter dem Flächen-Filter messende Druckmeß-Gerät anhand des Druckes in der Einlaßkammer des Patronen-Filters dessen Verschmutzungsgrad anzeigt. Statt den Druck unmittelbar mit einem Manometer o.dgl. zu messen, ist es auch denkbar, eine mit dem Druck korrelierende andere Größe, beispielsweise eine Strömungsgeschwindigkeit, mit einem entsprechenden geeigneten Gerät zu messen und zur Anzeige bzw. für ein Steuersignal zu verwenden.

Wird zur Filterung der Luft mit einem Filtergerät der beschriebenen Art ein Elektro-Filter, also ein elektrostatisch wirkender Filter-Kollektor, verwendet, so ergibt sich häufig der wesentliche Nachteil, daß nach einer gewissen Sättigung des Elektro-Filters die zu filternden Partikel zwar ionisiert, nicht jedoch im Filter festgehalten, sondern in ionisiertem Zustand aus dem Filter wieder herausgerissen werden. Dadurch gelangen die ionisierten Partikel wieder ins Freie und verschmutzen zäh haftend Wände, Maschinen und sonstige Einrichtungen der Betriebsräume mit noch wesentlich nachteiligeren Folgen als das bei nichtionisierten Partikeln der Fall ist. Bei solchen Filtergeräten ist es daher von besonderer Wichtigkeit, den Verschmutzungsgrad der Elektro-Filter auf einfache Weise erfassen zu können sowie zu gewährleisten, daß die Sättigung der Elektro-Filter trotz deren abgekapselter Unterbringung im Strömungsweg deutlich erkennbar ist. Zur Lösung dieses Problems wird bei einem Filtergerät der beschriebenen Art, insbesondere bei einem Filtergerät der eingangs genannten Art, vorgeschlagen, daß es außer dem Elektro-Filter einen diesem im Strömungsweg nachgeordneten mechanischen Folge-Filter mit geringem Durchgangswiderstand im sauberen Zustand und mit der Verschmutzung ansteigendem Durchgangswiderstand aufweist und daß vorzugsweise ein Gerät, wie ein Signal-Gerät, zur Überwachung des Druckes im Strömungsweg vor dem Folge-Filter vorgesehen ist. Sobald der Elektro-Filter in den Bereich seiner Sättigung kommt und ionisierte Partikel durch den Elektro-Filter in den weiteren Strömungsweg durchgerissen werden, steigt der Durchgangswiderstand des Folge-Filters dadurch, daß er die durchgerissenen ionisierten Partikel zurückhält, wodurch der Druck im Strömungsweg vor dem Folge-Filter deutlich, beispielsweise von unter auf über 5 mbar, ansteigt, was von dem Überwachungs-Gerät angezeigt wird. Bei einer einfachen Ausbildung ist der Folge-Filter durch den Patronen-Filter gebildet, so daß also die Anzeige ein deutlicher Hinweis auf das erforderliche Auswechseln sowohl des Elektro-Filters als ggf. auch der Filterpatronen ist. Werden daraufhin die Filterpatronen nicht ausgewechselt, so neigen sie zu einem völligen Durchgangsverschluß, was dann unweigerlich zum nicht zu übersehenden Abbruch der Absaugung an der Absaugstelle führt.

Die Sicherheit des Filtergerätes kann jedoch noch weiter wesentlich dadurch verbessert werden, daß zwischen dem Elektro-Filter und dem Folge-Filter ein Prüf-Filter mit geringem Durchgangswiderstand im sauberen Zustand und sich steil erhöhendem Durchgangswiderstand im Falle der Sättigung des Elektro-Filters angeordnet ist und daß ein Gerät, wie ein Signal-Gerät, zur Überwachung des Druckes im Strömungsweg vor dem Prüf-Filter vorgesehen ist. Die vom Elektro-Filter durchgelassenen Partikel werden also gar nicht mehr bis zum Folge-Filter bewegt, sondern vorher von dem Prüf-Filter abgefangen, der statt des Folge-Filters als Indikator für den Verschmutzungsgrad des Elektro-Filters herangezogen wird. Hierbei ist zu beachten, daß in beiden Fällen der Elektro-Filter zunächst praktisch alle Partikel aus der Schmutzluft abscheidet, daß also im Normalbetrieb die nachgeschalteten Filter, außer ggf. die Geruchsfilter, überhaupt nicht belastet werden, sondern praktisch in ihrem sauberen Zustand verbleiben. Erst wenn der Elektro-Filter in den Bereich seiner Sättigungsgrenze gelangt, werden die nachgeschalteten Filter, im zuletzt beschriebenen Fall jedoch nur der Prüf-Filter mit Partikeln beaufschlagt. Der Prüf-Filter ist dabei so ausgelegt, daß er unter der dadurch verursachten Verschmutzung in seinem Durchgangswiderstand jäh steil ansteigt, so daß der Druck im Strömungsweg vor dem Prüf-Filter deutlich, nämlich beispielsweise von etwa 15 auf 5 mbar, absinkt und zu einem entsprechenden Signal führt.

Diese Wirkungen können wesentlich noch dadurch verbessert werden, daß das Sauggebläse vor Schmutzbeaufschlagung, insbesondere vor Beaufschlagung mit ionisierten Partikeln, geschützt wird und so nicht durch Zusetzen des Sauggebläses verfälschte Druckwerte entstehen. Dies kann auf einfache Weise dadurch erreicht werden, daß mindestens ein Filter, insbesondere mindestens ein Prüf- bzw. Flächen-Filter und/oder mindestens ein Primär-Filter, insbesondere in Form mindestens eines Elektro-Filters, einlaßseitig des Sauggebläses, vorzugsweise benachbart zu und/oder zwischen dem Einlaß des Sauggebläses und der Schmutzluft-Ansaugöffnung liegt. Durch diese Anordnung wird auch eine sehr kompakte Ausbildung des Filtergerätes erzielt.

Eine besonders vorteilhafte Weiterbildung des Erfindungsgegenstandes besteht darin, daß der einlaßseitige Prüf-Filter mit dem Primär-Filter in einem die Schmutzluft-Saugöffnung aufweisenden Primärfilter-Gehäuse angeordnet ist, das vorzugsweise mit dem Geräte-Gehäuse ausschließlich durch den einlaßseitigen Prüf-Filter strömungsverbunden ist, so daß also alle, das Primärfilter-Gehäuse durchsetzende Luft zum Sauggebläse gelangt. Das Primärfilter-Gehäuse kann in einfacher Weise beispielsweise dadurch mit dem Geräte-Gehäuse integriert sein, daß es mit diesem auf einem gemeinsamen, beispielsweise fahrbaren Untergestell angeordnet ist. Das erfindungsgemäße Filtergerät ist also insbesondere als mobiles Gerät, beispielsweise als selbstfahrendes Gerät geeignet, das auf einfache Weise an jeden beliebigen Arbeitsplatz gebracht werden kann und lediglich durch Anschluß an das elektrische Netz betriebsbereit ist. Insbesondere wenn das Primärfilter-Gehäuse an eine aufrechte Außen-Wand des Geräte-Gehäuses mit etwa gleichem zugehörigem Querschnitt anschließt, ergibt sich durch die Hintereinander-Anordnung der beiden Gehäuse eine sehr kompakte Ausbildung. Das Geräte-Gehäuse kann dabei mit dem Sauggebläse und ggf. den Druckmeß- und Anzeigegeräten eine in sich geschlossene Baugruppe bilden, die wahlweise zur Ausbildung eines Filtergerätes ohne Elektro-Filter als auch zur Ausbildung eines Filtergerätes mit Elektro-Filtern geeignet ist; im letzteren Fall wird lediglich das Primärfilter-Gehäuse, das ebenfalls mit den Aufnahmen für die Elektro-Filter und ggf. die zugehörigen weiteren Filter eine in sich geschlossene Baugruppe gebildet, deckungsgleich an einer aufrechten Wand des Geräte-Gehäuses, quasi als dessen Fortsetzung, befestigt, so daß sich ein entsprechend verlängertes Gesamtgehäuse ergibt. Das Patronenfilter-Gehäuse bildet ebenfalls eine in sich geschlossene abnehmbare Baugruppe mit den Halterungen für die zugehörigen Filter, wobei diese Baugruppe, ggf. benachbart zum Primäfilter-Gehäuse auf die Oberseite des Geräte-Gehäuses aufgesetzt wird. Das Geräte-Gehäuse bildet also das Grundgehäuse, an welchem unterschiedliche Filtereinheiten als Baueinheiten angeordnet werden können.

Das beschriebene, im Strömungsweg vor dem Folge-Filter vorgesehene Gerät zur Drucküberwachung ist zweckmäßig dem Geräte-Gehäuse, also demjenigen Raum im Strömungsweg zugeordnet, der auslaßseitig vom Sauggebläse liegt und der zweckmäßig durch den Beruhigungsraum gebildet ist. Das andere Drucküberwachungs-Gerät mißt demgegenüber zweckmäßig den Druck im Primärfilter-Gehäuse und zwar auslaßseitig von dem Primär-Filter, jedoch bei Anordnung eines diesem zugeordneten Prüf-Filters vor dessen Einlaßseite. Zweckmäßig sind dabei zwei Manometer nebeneinander an einer Außen-Wand des Geräte-Gehäuses angeordnet, so daß sie mit diesem die zugehörige Baugruppe bilden.

Die Wirkung des jeweiligen zum Sauggebläse einlaßseitig liegenden Filters kann noch weiter dadurch verbessert werden, daß der Saugkanal des Sauggebläses einen zur Einlaß-Wand etwa auf die Flächengröße des einlaßseitigen Prüf-Filters und/oder des Primär-Filters erweiterten und an die Innenseite der Einlaß-Wand anschließenden Saugtrichter aufweist, so daß der jeweilige Filter über seine gesamte Fläche im wesentlichen gleichmäßig durchströmt wird. Der einlaßseitige Prüf-Filter steht zweckmäßig benachbart zur Trichteröffnung und unabhängig hiervon parallel zu dieser Trichteröffnung, so daß sich sehr günstige Strömungsverhältnisse ergeben.

Zum Schutz des Primär-Filters, insbesondere vor groben Partikeln, Funken u.dgl., ist dem Primär-Filter zweckmäßig mindestens ein einlaßseitiger Flächen-Filter vorgeschaltet, so daß also beiderseits des Primär-Filters Flächen- bzw. Prüf-Filter angeordnet sein können.

Um auch an der Einlaßseite des im Strömungsweg auf die Saugöffnung folgenden ersten Filters, also beispielsweise des Primär-Filters, eine über dessen Flächenerstreckung möglichst gleichmäßige Luftbeaufschlagung und damit -verschmutzung zu erzielen, liegt die Einlaßseite dieses Filters in einer ihrer Flächengröße mindestens etwa entsprechenden Verteilerkammer, in welche die Schmutzluft in einer Richtung eintritt, die von der etwa rechtwinklig gegen die Einlaßseite dieses Filters gerichteten Richtung abweicht. Dadurch wird die eintretende Schmutzluft nicht in einem dem Querschnitt der Saugöffnung entsprechenden gebündelten Strahl gegen die Einlaßseite dieses Filters geführt, sondern zunächst in der Verteilerkammer etwa auf die Flächengröße dieser Einlaßseite unter Umlenkung verteilt, so daß sie dann gleichmäßig den Filter durchsetzen kann. Bei einer sehr einfachen Ausführungsform ist dabei die Schmutzluft-Saugöffnung an einer quer zur Einlaßseite dieses Filters liegenden Gehäuse-Wand, insbesondere der oberen Gehäuse-Wand, des Primärfilter-Gehäuses mit Abstand von der Verteilerkammer vorgesehen, so daß sie zunächst gegen eine quer zur Einlaßseite liegende Seite des Filters strömt, an dieser umgelenkt wird und winkelförmig, also beispielsweise etwa parallel zur Einlaßseite in die Verteilerkammer eingeleitet wird.

Eine besonders vorteilhafte Weiterbildung, insbesondere eines Filtergerätes der beschriebenen Art, besteht darin, daß eine Schmutzluft-Saugöffnung unmittelbar durch eine zu öffnende Gehäuseseite, insbesondere die der Einlaßseite des im Strömungsweg ersten Filters zugehörige Gehäuseseite gebildet ist, so daß also nicht, wie sonst üblich, über Saugschläuche mit Saugtrichtern in Entfernung zum eigentlichen Filtergerät abgesaugt wird, sondern das Gehäuse selbst den Saugtrichter bildet, durch den die Schmutzluft bzw. Rauchgase ohne weitere Umlenkung unmittelbar in den Primär-Filter angesaugt werden. Dies kann in einfacher Weise dadurch erreicht werden, daß die zugehörige Seite des Gehäuses, vorzugsweise im wesentlichen über ihre gesamte Höhe und/oder Breite durch eine zu einer Absaughaube aufklappbare Gehäuse-Wand verschließbar ist.

Da die zu filternde Schmutzluft häufig auch Rauchgase von Ölen o.dgl. enthält, die durch Kondensation abgeschieden werden, ist es zweckmäßig, wenn der Primär- bzw. Elektro-Filter platten- bzw. kassettenförmig aufrecht bzw. vertikal steht, so daß das Öl o.dgl. leicht nach unten abfließen kann. Zum Auffangen des abgeschiedenen Öles ist ein entleerbares Öl-Abscheidegefäß im unteren Bereich des Primärfilter-Gehäuses angeordnet, das beispielsweise über einen mit einem Sperrventil versehenen Ablaßkanal aus dem Gehäuse entleert werden kann. Damit das Abscheidegefäß die gesamte Zone erfaßt, in welcher Öl o.dgl. abtropft, ist es vorzugsweise als entsprechend großflächige Abscheidewanne ausgebildet.

Der jeweilige Flächen- bzw. Prüf-Filter besteht zweckmäßig aus einer Vliesmatte mit einem vorgeschalteten Papierfilter, welche eine Durchgangswiderstands-Charakteristik hat, die bei Verschmutzung steil ansteigt. Dieses eigentliche Filtermaterial ist zweckmäßig in einem Filterrahmen zwischen grobmaschigen Gittern o.dgl. angeordnet, so daß ein schnelles Auswechseln möglich ist. Vorteilhaft sind diese Filter als ebene plattenförmige Gebilde gestaltet. Es ist also ein Filtersystem geschaffen, welches im Normalbetrieb im wesentlichen nur mit dem bzw. den Elektro-Filtern arbeitet, wobei alle nachgeordneten Filter unwirksam sind. Erst bei einem vergessenen Reinigen der Elektro-Filter sprechen die Sicherheits-Filter an und dies wird durch die Überwachungs-Geräte je nach Anzahl stufenweise deutlicher angezeigt. Durch die Nachsicherung durch den Patronen-Filter wird auch ein Verschmutzen des zuletzt zur Geruchsminderung geschalteten Aktivkohle-Filters und ein schnelles Abfallen von dessen Wirksamkeit verhindert.

Diese und weitere Merkmale von bevorzugten Weiterbildungen der Erfindung gehen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein können.

Ausführungsbeispiele der Erfindung sind in den Zeichnungen dargestellt und werden im folgenden näher erläutert. In den Zeichnungen zeigen:

Fig. 1     ein erfindungsgemäßes Filtergerät in im wesentlichen geschnittener Seitenansicht;

Fig. 2     das Filtergerät gemäß Fig. 1 in teilweise geschnittener Endansicht von links;

Fig. 3     das Filtergerät gemäß Fig. 1 in Draufsicht;

Fig. 4     ein weiteres Ausführungsbeispiel in einer Darstellung entsprechend Fig. 1;

Fig. 5 bis 7     ein weiteres Ausführungsbeispiel in Darstellungen entsprechend den Fig. 1 bis 3.

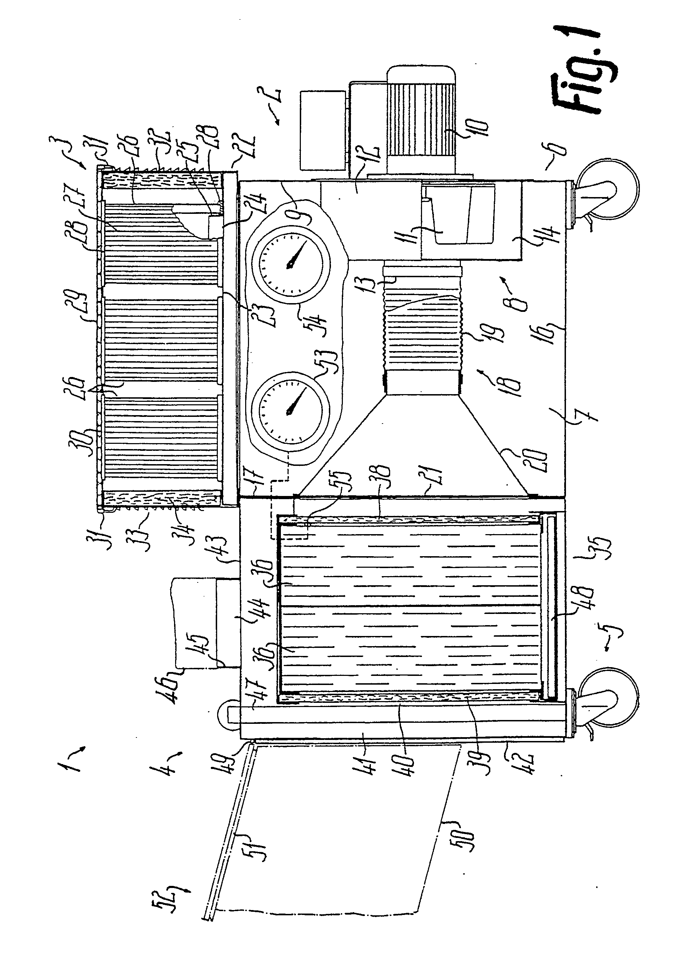

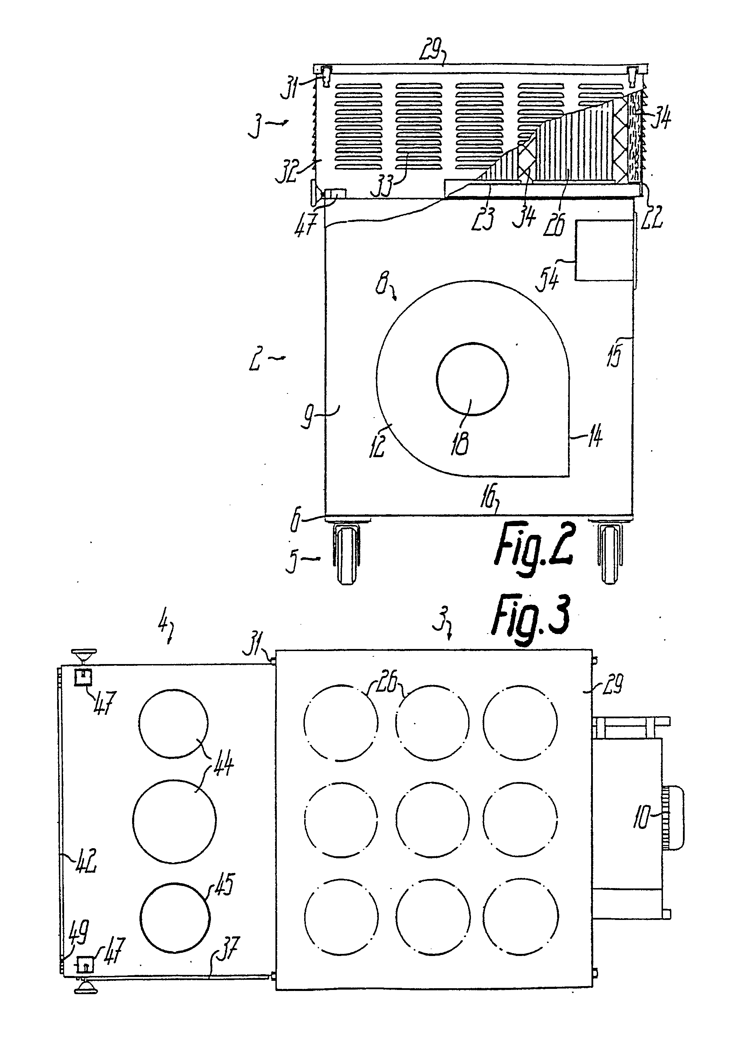

Das in den Fig. 1 bis 3 dargestellte Filtergerät 1 ist im wesentlichen aus drei Baueinheiten, nämlich einem filterlosen Grundgerät 2, einem diesem im Strömungsweg nachgeschalteten Nach- oder Patronen-Filter 3 und einem Primär-Filter 4 zusammengesetzt. An der Unterseite weist das im wesentlichen kubische Filtergerät 1 ein Fahrgestell 5 in Form beispielsweise von mindestens drei einzeln an der Unterseite befestigten Nachlauf-Laufrollen auf.

Das Grundgerät 2 weist ein in Draufsicht und ggf. in mindestens einer Seitenansicht nahezu quadratisches, also etwa würfelförmiges Geräte-Gehäuse 6 auf, dessen Innenraum einen im Betriebszustand im wesentlichen geschlossenen Beruhigungsraum 7 begrenzt. In dem Geräte-Gehäuse 6 ist ein Sauggebläse 8 mit horizontaler Rotor-Mittelachse angeordnet und an der Innenseite der vom Primär-Filter 4 abgekehrten aufrechten Gehäuse-Wand 9 befestigt. An der Außenseite dieser Wand 9 ist ein Gebläse-Antriebsmotor 10 achsgleich zum Sauggebläse 8 derart freiliegend und abstehend befestigt, daß seine Abtriebswelle die Wand 9 durchsetzt und den von einem Gebläse-Gehäuse 12 umgebenden Gebläserotor 11 trägt. Das Sauggebläse 8 ist durch eine entsprechend große Öffnung in der Wand 9 von außen her eingesetzt und mit einer an der Außenseite der Wand 9 anliegenden, auch den Antriebsmotor 10 tragenden Flanschplatte an der Wand 9 befestigt. Das nur geringfügig in den Beruhigungsraum 7 axial vorstehende Gebläse-Gehäuse 12 hat an seiner von der Wand 9 abgekehrten Seite einen in seiner Mittelachse liegenden Einlaß in Form eines Anschlußstutzens und am Umfang einen über seine Axialerstreckung reichenden tangentialen Anschluß 14. Der mit Abstand oberhalb des Bodens des Beruhigungsraumes 7 liegende und vertikal stehende Auslaß 14 ist gegen eine benachbarte Gehäuse-Wand 15, nämlich gegen die Innenseite der Vorderwand gerichtet und hat vom Boden des Beruhigungsraumes 7 einen wesentlich kleineren Abstand als von dessen Oberseite. Der Einlaß 13 ist über einen geraden, in der Mittelachse des Gebläses liegenden horizontalen Saugkanal 18 zu einer Einlaß-Wand 17 des Gehäuses 6 geführt, die durch die der Wand 9 gegenüberstehende Wand 17 gebildet ist. Der Saugkanal 18 liegt berührungsfrei etwa in der Mitte des Beruhigungsraumes 7, wobei sein an den Einlaßstutzen 13 anschließender Abschnitt durch einen flexiblen Balg-Schlauch 19 gebildet ist. Sein an die Einlaß-Wand 17 anschließender Abschnitt ist durch einen Saugtrichter 20 gebildet, der auf den größeren Teil der Fläche der Einlaß-Wand 17 erweitert und um eine die Wand 17 durchbrechende Einlaßöffnung an der Innenseite der Wand 17 befestigt ist. Die vertikal stehende Trichteröffnung 21 schließt damit an den Primär-Filter 4 an.

Der Patronen-Filter 3 weist ebenfalls ein Gehäuse 22 auf, das quadratischen, gegenüber dem Gehäuse 6 nur geringfügig größeren Grundriß hat, dessen Höhe gegenüber der zugehörigen Kantenlänge jedoch wesentlich kleiner ist. Die Boden-Platte 23 dieses Gehäuses 22 weist in einem rechtwinkligen Raster eine Mehrzahl neben- und hintereinander angeordneter Einlaßöffnungen 24 auf, die jeweils durch einen nach oben gerichteten ringförmigen Steckflansch 25 gebildet sind. Auf jeden Steckflansch 25 ist eine Filterpatrone 26 aufgesteckt, die aus einem hülsenförmig angeordneten Faltenbalg 27 aus flächigem Filtermaterial und zwei Ringdichtungen 28 besteht, die an den Enden der Hülsenform vorgesehen sind und den Hülsenrand des Faltenbalges 27 aufnehmen. Der Boden-Platte 23 gegenüberliegend, also an der Oberseite, weist das Gehäuse 22 eine als lösbarer Deckel ausgebildete Verschluß-Platte 29 auf, die zweckmäßig unter Zwischenlage einer elastischen Einlage aus Schaumstoff o.dgl. gegen die oberen Stirnflächen der Filterpatronen 26 gespannt und mit Verschluß-Riegeln 31 in ihrer Lage gesichert ist. Durch die Verschluß-Platte 29 sind die von den Einlaßöffnungen 24 abgekehrten Enden der Filterpatronen 26 dicht geschlossen, so daß Luft nur durch ihren Faltenbalg 27, also am Außenumfang, austreten kann. Die neun Filterpatronen 26 sind mit Abstand voneinander sowie mit Abstand von den zu den Platten 23, 29 rechtwinklig stehenden Außen-Wandungen 32 des Gehäuses 22 angeordnet. Diese Außen-Wandungen 32 weisen den Abluft-Ausgang 33 des Filtergerätes 1 in Form zahlreicher Ausgangsöffnungen auf, die über die gesamte Höhe und Breite jeder Wandung 32 verteilt sind. An ihren Innenseiten sind die Wandungen 32 jeweils mit einem Nach-Filter 34 abgedeckt, der zweckmäßig durch einen plattenförmigen bzw. rahmengefaßten Aktivkohle-Filter gebildet ist. Das Gehäuse 22 ist auf die auf voller Weite offene Oberseite des Gehäuses 6 mit seiner Boden-Platte 23 aufgesetzt und durch geeignete Befestigungsglieder gesichert, derart, daß der Patronen-Filter 3 nur über die Einlaßöffnungen 24 zum Beruhigungsraum 7 offen ist. Durch die beschriebene Anordnung ist der Auslaß 14 nicht gegen den Patronen-Filter 3, sondern in einer davon abweichenden Richtung, nämlich rechtwinklig zu den Mittelachsen der Einlaßöffnungen 24 gerichtet.

Die Filtereinheit 4 weist ein Gehäuse 35 auf, das mit seiner zugehörigen aufrechten Wand an der Einlaß-Wand 17 des Geräte-Gehäuses 6 angeordnet und beispielsweise mit Durchgangsschrauben befestigt ist. Das Gehäuse 35 weist gleiche Höhe und Breite wie das Gehäuse 6 auf, so daß die Seitenwände der beiden Gehäuse ebenengleich aneinanderschließen. Im Gehäuse 35 sind zwei aufrechtstehende Elektro-Filter 36 in Längsrichtung des Saugkanales 18 unmittelbar hintereinander derart angeordnet, daß sie in Ansicht auf die Trichteröffnung 21 diese vollständig abdecken. An der Vorderwand des Gehäuses 35 ist eine Tür 37 vorgesehen, nach deren Öffnen die Elektro-Filter 36 aus entsprechenden Halterungsführungen herausgezogen werden können. Unmittelbar benachbart zu der dem Saugkanal 18 zugewandten Seite des zweiteiligen Elektro-Filters 36 ist ein flächiger Prüf-Filter 38 vorgesehen, der etwa gleiche Flächengröße wie der Elektro-Filter 36 hat und mit geringem Abstand der Trichteröffnung 21 gegenübersteht. Auf der anderen Seite der Elektro-Filter 36 ist ein etwa gleich dimensionierter und/oder ausgebildeter Flächen-Filter 39 in gleicher Weise angeordnet. Die Filter 36, 38, 39 sind zur Durchströmung quer zu ihren größten, vertikalen Oberflächen vorgesehen, werden also aufeinanderfolgend nacheinander von der Einlaßseite 40 her durchströmt. Diese Einlaßseite 40 liegt in einer Verteilerkammer 41 des Gehäuses 35, die gegenüber den Filtereinsätzen zumindest größere Höhe ggf. aber auch größere Breite aufweist, nämlich über die gesamte Höhe und Breite des Gehäuses 35 reicht. An ihrer von der Einlaßseite 40 abgekehrten Seite ist sie durch die vom Grundgerät 2 abgekehrte Gehäuse-Wand 42 derart begrenzt, daß sie nur eine verhältnismäßig geringe Tiefe hat. In der oberen Deck-Wand 43 des Gehäuses 35, die mit Abstand oberhalb der Aufnahmen für die Filtereinsätze in Höhe der Oberseite des Gehäuses 6 liegt, ist mindestens eine Schmutzluft-Saugöffnung 44 vorgesehen, wobei im vorliegenden Fall drei parallel zur Einlaß-Wand 17 nebeneinanderliegende Saugöffnungen 44 vorgesehen sind. Jede Saugöffnung 44 ist durch einen nach oben vorstehenden Anschlußstutzen 45 begrenzt, der als Steckstutzen für einen aufzusteckenden Saugschlauch zur Verbindung mit einem Saugtrichter o.dgl. ausgebildet ist. Die durch die jeweilige Saugöffnung 44 in das Gehäuse 35 eintretende Schmutzluft wird zunächst an der Oberseite der Filtereinsätze etwa horizontal zur Verteilerkammer 41 umgelenkt, in welche sie dann abgewinkelt nach unten eintritt, derart, daß sie in gleichmäßiger Flächenverteilung die Filtereinsätze erreicht und durchströmt. Zur Halterung der Saugschläuche 46 bzw. der Saugtrichter können Gelenkarme vorgesehen sein, die in Teleskophalterungen 47 des Gehäuses 35 befestigt bzw. festgeklemmt werden können.

An der Unterseite der Filtereinsätze des Primär-Filters 4 ist ein wannenförmiges Abscheidegefäß 48 unmittelbar oberhalb des Bodens des Gehäuses 35 angeordnet, von welchem das von den Filtereinsätzen abtropfende Öl aufgefangen wird. Von dem Abscheidegefäß 48 führt ein nicht näher dargestellter Entleerungskanal aus dem Gehäuse 35.

Die Gehäuse-Wand 42 ist im Bereich ihrer oberen horizontalen Kante mit einem Scharnier 49 hängend klappbar am übrigen Gehäuse 35 gelagert, derart, daß sie beispielsweise in die in Fig. 1 strichpunktiert angedeutete Stellung nach außen geklappt werden kann, in welcher die zugehörige Seite des Gehäuses 35, also die Verteilerkammer 41 ins Freie offen ist. Im Bereich der Seitenkanten sind an der Wand 42 zwei Abschirmwände 50 mit Scharnieren 51 derart schwenkbar gelagert, daß sie bei geschlossener Wand 42 an deren Innenseite liegen und bei geöffneter Wand 42 beiderseits nach unten hängen, so daß eine an der Unterseite und am freien Ende offene Absaughaube 52 gebildet ist, die oben und seitlich im wesentlichen abgedichtet an den Innenraum des Gehäuses 35, also an den Verteilerraum 41 bzw. die Einlaßseite 40 anschließt.

Am Grundgerät 2, und zwar am Gehäuse 6 sind zwei Geräte 53, 54 zur Drucküberwachung, also beispielsweise Manometer angeordnet. Diese Geräte sind im wesentlichen an der vorderen Seiten-Wand 15 befestigt und weisen an deren Außenseite eine Anzeigevorrichtung in Form eines einer Druckskala zugeordneten drehbaren Zeigers auf. Der Meßwertgeber 55 bzw. der Druckfühler des einen Gerätes 53 liegt im Strömungsweg zwischen dem letzten Elektro-Filter 36 und dem Prüf-Filter 38, die mit geringem Spaltabstand zueinander angeordnet sind. Das andere Gerät 54 mißt unmittelbar den Druck im Beruhigungsraum 7.

Das beschriebene Filtergerät arbeitet nach folgendem Verfahren: Bei Betrieb des Sauggebläses 8 wird in der Regel über die Saugöffnung 44 bzw. die Saugöffnungen 44 Schmutzluft in das Gehäuse 35 angesaugt. Sie wird - wie beschrieben - über die Verteilerkammer 41 dem Grob- bzw. Flächen-Filter 39 zugeführt und gelangt von diesem unmittelbar in die Elektro-Filter 36. Sofern diese noch nicht ihre Sättigung erreicht haben, halten sie die in der Schmutzluft befindlichen Partikel nahezu vollständig durch elektrostatische Haftung fest, so daß den Prüf-Filter 38 praktisch nur partikelfreie Luft durchsetzt; der Prüf-Filter 38 wird also nicht verschmutzt. Die Luft gelangt über den Saugtrichter 20, den Balg-Schlauch 19 und den Einlaß 13 in das Sauggebläse 8 und wird von diesem gegen die Wand 15 gerichtet dem Beruhigungsraum 7 zugeführt. Die beruhigte Luft gelangt dann durch die Einlaßöffnungen 24 in die Filterpatronen 26, durchsetzt deren Filterbalge 27, wiederum ohne dies zu verschmutzen und wird schließlich in den Aktivkohle-Filtern 34 geruchsfrei gefiltert, wonach sie den Ausgang 33 ins Freie verläßt. Sobald die Kapazität der Elektro-Filter 36 beginnt erschöpft zu sein, schlagen die Partikel, beispielsweise die Rauchgase durch die Elektro-Filter 36 durch und beaufschlagen wenigstens mit ihren gröberen Partikeln den Prüf-Filter 38. Dadurch steigt dessen Durchgangswiderstand steil an, wodurch der vom Meßwertgeber 55 gemessene Unterdruck unmittelbar vor dem Prüf-Filter 38 absinkt, also der Druck in diesem Bereich ansteigt. Dies wird vom Gerät 53 angezeigt. Werden daraufhin die Elektro-Filter 36 nicht herausgenommen und gereinigt bzw. durch gereinigte ersetzt, so treten die Rauchgase auch durch den Prüf-Filter 38 durch, gelangen in den Beruhigungsraum 7 und von dort in den Patronen-Filter 3, der als Nach-Filter vorgesehen ist und dessen Durchgangswiderstand dann ebenfalls beginnt anzusteigen. Dadurch steigt der Druck in der Beruhigungskammer 7 beträchtlich, was nunmehr vom Gerät 54 angezeigt wird. Wird nunmehr noch keine Reinigung bzw. Erneuerung der Filter vorgenommen, so werden der Prüf-Filter 38 und der Patronen-Filter 3 immer weiter verstopft bzw. zugesetzt, wobei diese Filter so aufeinander abgestimmt sind, daß sie dann nach nur noch relativ kurzer Betriebszeit gegenüber der Pumpkraft des Sauggebläses 8 einen so hohen Durchgangswiderstand erzeugen, daß durch die Saugöffnung 44 praktisch keine Luft mehr angesaugt wird. Dadurch ist gewährleistet, daß sowohl an der Absaugstelle auffällig angezeigt wird, daß das Filtergerät nicht mehr weiterarbeitet, als auch, daß keine weiteren Partikel im Elektro-Filter ionisiert werden und durch den Ausgang 33 wieder ausgetragen werden können. Beim Betrieb mit der Absaughaube 52 werden die Saugöffnungen 44, beispielsweise durch aufzusteckende Deckel verschlossen und die Schmutzluft wird großflächig durch die Absaughaube 42 direkt den Filtereinsätzen des Primär-Filters 4 zugeführt.

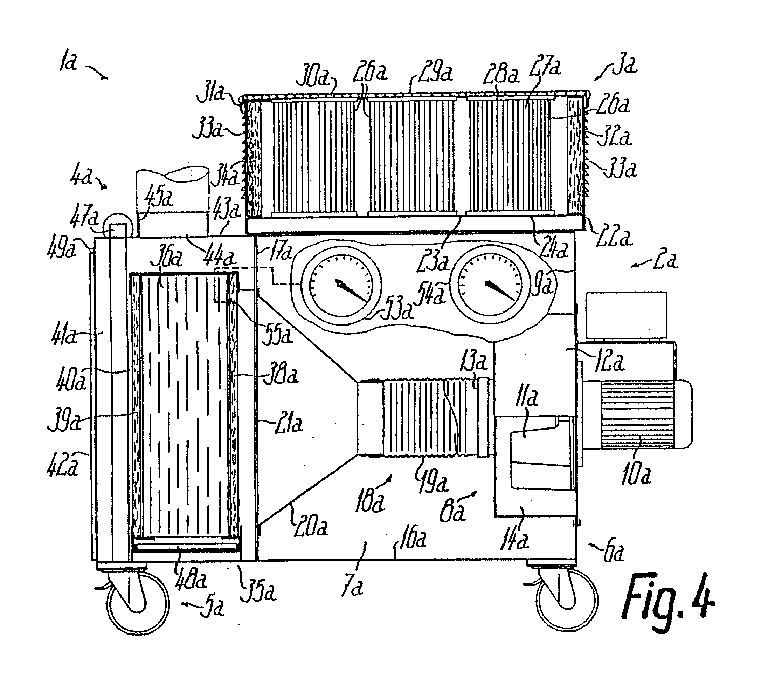

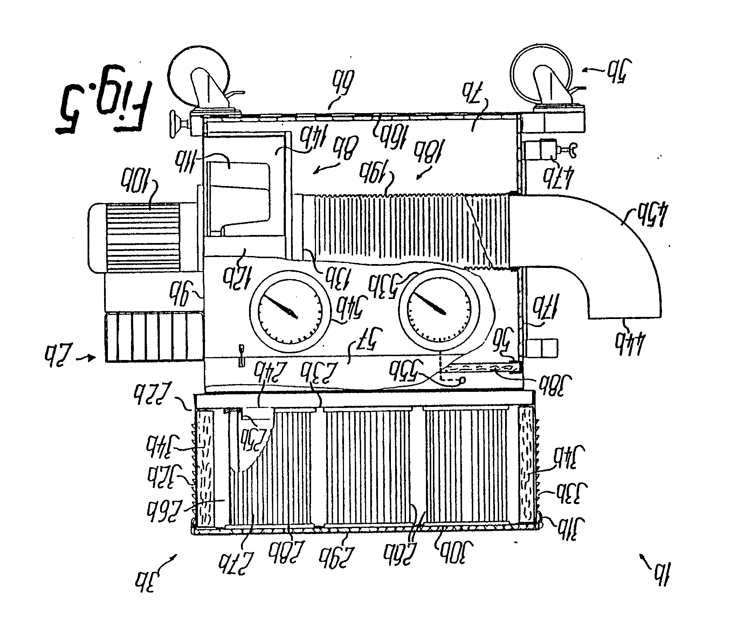

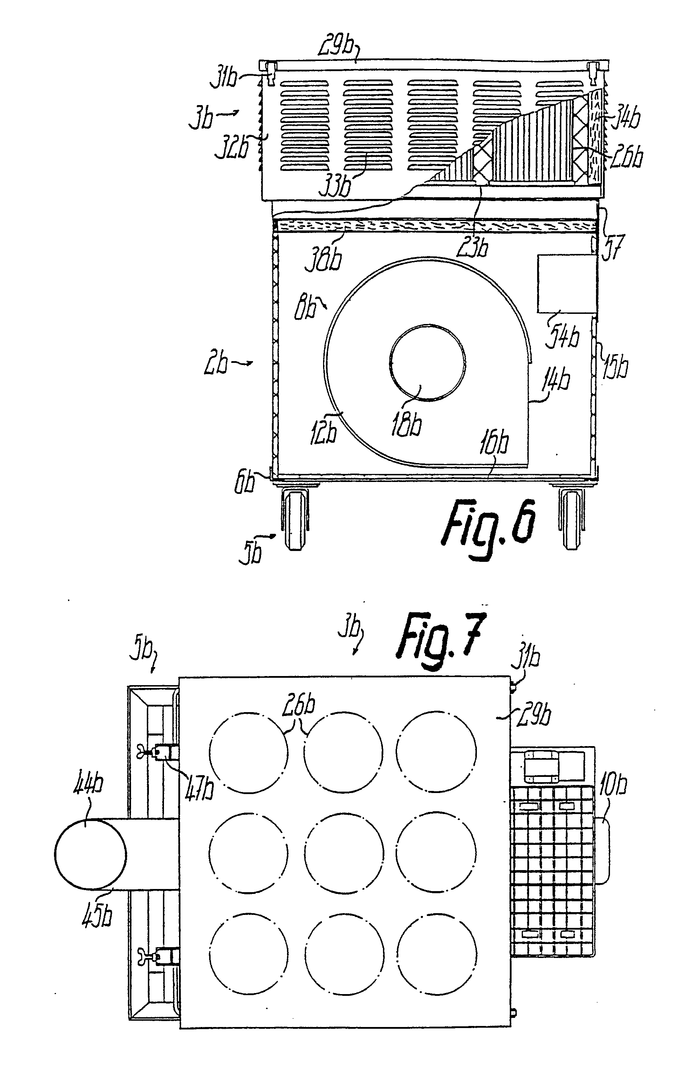

In den Fig. 4 bis 7 sind für einander entsprechende Teile die gleichen Bezugszeichen wie in den Fig. 1 bis 3, jedoch in Fig. 4 mit dem Index "a" und in den Fig. 5 bis 7 mit dem Index "b" verwendet.

Die Ausführungsform nach Fig. 4 unterscheidet sich von derjenigen nach Fig. 1 im wesentlichen nur dadurch, daß ein beträchtlich kleinerer Primär-Filter 4a vorgesehen ist, dar nur einen einzigen Elektro-Filter 36a aufweist. Die das Grundgerät 2a und den Patronen-Filter 3a bildenden Baueinheiten sind somit die gleichen wie bei der Ausführungsform nach den Fig. 1 bis 3, während für den Primär-Filter 4a eine andere, nämlich kleinere Baueinheit verwendet ist. Die Wirkungsweise des Filtergerätes 1a nach Fig. 4 ist bis auf die geringere Sättigungskapazität des Primär-Filters 4a die gleiche wie desjenigen nach den Fig. 1 bis 3.

In den Fig. 5 bis 7 ist ein Filtergerät 1b dargestellt, das gegenüber denjenigen nach den Fig. 1 bis 4 wesentlich einfacher ist, nämlich die durch die Filtereinheit 4 bzw. 4a gebildete Baueinheit nicht aufweist. Das Grundgerät 2b sowie der Patronen-Filter 3b sind jedoch im wesentlichen die gleichen wie bei den zuvor beschriebenen Ausführungsformen.

Das Grundgerät 2b weicht allerdings insofern von den Ausführungsformen nach den Fig. 1 bis 4 ab, als der Saugkanal 18b nicht trichterförmig erweitert, sondern in Form eines durchgehenden Schlauches 19b bis zur Einlaß-Wand 17b geführt ist. An der Einlaß-Wand 17b ist ein Rohrkrümmer 45b befestigt, dessen in den Beruhigungsraum 7b ragendes Ende an das zugehörige Ende des Schlauches 19b angeschlossen ist und dessen freiliegendes, nach oben weisendes Ende die Schmutzluft-Saugöffnung 44b bildet; dieses Ende ist also zum Aufstecken eines Saugschlauches o.dgl. vorgesehen. Im Strömungsweg vor dem Patronen-Filter 3b, nämlich innerhalb des Beruhigungsraumes 7b bzw. als dessen obere Abdeckung, ist mit geringem Abstand unterhalb der Einlaßseite, also unterhalb der zugehörigen Stirnflächen der Filterpatronen 26b bzw. unterhalb der Einlaßöffnungen 24b der Prüf-Filter 38b horizontal, nämlich parallel zur Einlaßseite des Patronen-Filters 3b angeordnet. Zu diesem Zweck sind an den Innenseiten der Wände 9b, 17b des Gehäuses 6b Steckführungen 56 angeordnet, in welche der Prüf-Filter 38b so eingeschoben werden kann, daß die Schmutzluft nur durch ihn in den Patronen-Filter 3b gelangen kann. Die vordere Gehäuse-Wand 15b ist oberhalb der Druckmeß-Geräte 53b, 54b als Klappe 57 ausgebildet, welche zum Herausziehen des Prüf-Filters 38b geöffnet werden kann. Das Druckmeß-Gerät 53b mißt über den Meßwertgeber 55b den Druck im Strömungsweg nach dem Prüf-Filter 38b und vor dem Patronen-Filter 3b, während das Druckmeß-Gerät 54b den Druck im Beruhigungsraum 7b mißt. Das Gerät 53b überwacht so in der beschriebenen Weise den Patronen-Filter 3b, während das Meßgerät 54b den Verschmutzungsgrad des Prüf-Filters 38b überwacht. Bei dieser Ausführungsform liegen also alle Filter 3b, 38b im Strömungsweg nach dem Auslaß 15b des Sauggebläses 8b. Durch den als Vorfilter vorgesehenen Prüf-Filter 38b wird die Standzeit der Filterpatronen 26b beträchtlich erhöht.

**Patentansprüche**

1. Filtergerät für partikelhaltige Schmutzluft, insbesondere rauchhaltige Schmutzluft an Arbeitsplätzen, mit einem Grund-Gehäuse (6), einer Schmutzluft-Saugöffnung (44) und einem mit dieser unter Zwischenschaltung eines einen Einlaß (13) und einen Auslaß (14) aufweisenden Sauggebläses (8) über einen Strömungsweg verbundenen, nach außen führenden Abluft-Ausgang (33) für die gefilterte Luft, wobei zwischen der Saugöffnung (44) und dem Abluft-Ausgang (33) mindestens ein Flächen-Filter (39, 38) und wenigstens ein weiterer, dem Flächen-Filter (39, 38) nachgeschalteter Filter (3) vorgesehen ist, dadurch gekennzeichnet, daß der nachgeschaltete Filter (3) als Patronen-Filter (3) mit einer Mehrzahl parallelgeschalteter Filterpatronen (26) ausgebildet ist und einen bodenseitigen Einlaß (24) aufweist, der an einer Oberseite des Grund-Gehäuses (6) vorgesehen ist, wobei ein Flächen-Filter (38) durch Filtratverschmutzung schneller als der Patronen-Filter (3) zusetzend ausgebildet ist.

2. Filtergerät nach Anspruch 1, dadurch gekennzeichnet, daß der Patronen-Filter (3) im wesentlichen die Oberseite des Grund-Gehäuses (6) abdeckend angeordnet und diese, dem Einlaß des Patronen-Filters (3) zugehörige Seite des Grund-Gehäuses (6) im wesentlichen auf voller Weite offen und mit einer Boden-Platte (23) eines Patronenfilter-Gehäuses (22) abgedeckt ist, die für jede der in einem Raster ebenengleich nebeneinander angeordneten Filterpatronen (26) eine zentrale Filterpatronen-Einlaßöffnung (24) aufweist.

3. Filtergerät nach Anspruch 1 oder 2, dadurch gekennzeichnet, daß die an beiden Enden offenen, hülsenförmigen Filterpatronen (26) des Patronen-Filters (3) mit ihren Stirnflächen zentriert zwischen zwei Platten (23, 29) eingespannt sind, von denen die eine mit Steckflanschen (25) begrenzte Filterpatronen-Einlaßöffnungen (24) aufweist und die gegenüberliegende als Verschluß-Platte (29) für die zugehörigen offenen Hülsenenden der Filterpatronen (26) ausgebildet ist, wobei diese beiden Platten (23, 29) vorzugsweise Außenwandungen des Patronenfilter-Gehäuses (22) sind, dessen quer dazu liegende Wandungen (32) den Abluft-Ausgang (33) in Form von Abluft-Ausgangsöffnungen, wie Schlitzen o.dgl. aufweisen.

4. Filtergerät nach einem der vorhergehenden Ansprüche, dadurch gekennzeichnet, daß zwischen dem Auslaß (14) des Sauggebläses (8) und dem diesem nachgeschalteten Patronen-Filter (3) ein Beruhigungsraum (7) vorgesehen ist, in dem das Sauggebläse (8) angeordnet ist, wobei von dem Einlaß (13) des Sauggebläses (8) ein Saugkanal (18) zu einer gegenüberstehenden Einlaß-Wand (17) sowie durch diese aus dem Grund-Gehäuse (6) geführt ist und das Sauggebläse (8) mit seinem durch mindestens eine Auslaßöffnung in einem Gebläsegehäuse (12) gebildeten tangentialen Auslaß (14) unmittelbar in das umgebende Grund-Gehäuse (6) mündet.

5. Filtergerät nach einem der vorhergehenden Ansprüche, dadurch gekennzeichnet, daß dem Patronen-Filter (3) mindestens ein Nach-Filter (34), wie ein flächiger Aktivkohle-Filter nachgeschaltet ist, der vorzugsweise als Endfilter benachbart zu den Filterpatronen (26) unmittelbar an der Innenseite der jeweiligen, die Abluft-Ausgangsöffnungen aufweisenden Außen-Wand (32) des Patronenfilter-Gehäuses (22) angeordnet ist.

6. Filtergerät nach einem der vorhergehenden Ansprüche, dadurch gekennzeichnet, daß mindestens einer der Flächen-Filter (38b) zwischen dem Auslaß (14b) des Sauggebläses (8b) und dem Patronen-Filter (3b) etwa parallel zu dessen Einlaßseite liegt und daß mindestens ein Gerät (53b, 54b), wie ein Signal-Gerät, zur Überwachung des Druckes im Strömungsweg unmittelbar vor und/oder hinter dem Flächen-Filter (38b) vorgesehen ist.

7. Filtergerät nach einem der vorhergehenden Ansprüche, dadurch gekennzeichnet, daß es mindestens einen Elektro-Filter (36) und den Patronen-Filter (3) als dem Elektro-Filter (36) nachgeschalteten, mechanischen Folge-Filter mit geringem Durchgangswiderstand im sauberen Zustand und mit der Verschmutzung ansteigendem Durchgangswiderstand aufweist und daß vorzugsweise ein Gerät (54), wie ein Signal-Gerät, zur Überwachung des Druckes im Strömungsweg vor dem Patronen-Filter (3) vorgesehen ist.

8. Filtergerät nach Anspruch 7, dadurch gekennzeichnet, daß zwischen dem Elektro-Filter (36) und dem Folge-Filter ein beispielsweise durch einen der Flächen-Filter (38) gebildeten Prüf-Filter mit geringem Durchgangswiderstand im sauberen Zustand und sich stark erhöhendem Durchgangswiderstand im Falle der Sättigung des Elektro-Filters (36) angeordnet sowie ein Gerät (53), wie ein Signal-Gerät, zur Überwachung des Druckes im Strömungsweg vor dem Prüf-Filter vorgesehen ist.

9. Filtergerät nach einem der Ansprüche 4 bis 8, dadurch gekennzeichnet, daß der Saugkanal (18) des Sauggebläses (8) einen zur Einlaß-Wand (17) etwa auf die Flächengröße eines Prüf- bzw. Flächen-Filters (39, 38) erweiterten und an die Innenseite der Einlaß-Wand (17) anschließenden Saugtrichter (20) aufweist, benachbart und/oder parallel zu dessen Trichteröffnung (21) der einlaßseitige Prüf- bzw. Flächen-Filter (38) steht.

10. Filtergerät nach einem der vorhergehenden Ansprüche, dadurch gekennzeichnet, daß mindestens ein Flächen-Filter (39, 38) bzw. Elektro-Filter (36) einlaßseitig des Sauggebläses (8) benachbart zu und/oder zwischen dem Einlaß (13) des Sauggebläses (8) und der Schmutzluft-Ansaugöffnung (44) liegt.

11. Filtergerät nach einem der vorhergehende Ansprüche, dadurch gekennzeichnet, daß ein als einlaßseitiger Prüf-Filter vorgesehener Flächen-Filter (38) einer mindestens diesen Filter aufweisenden Filtereinheit (4) in einem die Schmutzluft-Saugöffnung (44) aufweisenden Gehäuseteil (35) angeordnet ist, der insbesondere mit dem Grund-Gehäuse (6) zusammengefaßt und ausschließlich durch den einlaßseitgen Prüf-Filter strömungsverbunden ist und/oder an eine aufrechte Außen-Wand (17) des Grund-Gehäuses (6) mit etwa gleichem zugehörigen Querschnitt anschließt, wobei insbesondere an beiden Seiten der Filtereinheit (4) jeweils wenigstens ein einlaßseitiger Prüf- bzw. Flächen-Filter (39, 38) angeordnet ist.

12. Filtergerät nach einem der vorhergehenden Ansprüche, dadurch gekennzeichnet, daß für das Grund-Gehäuse (6) bzw. für einen weiteren eine Filtereinheit (4) aufnehmenden Gehäuseteil (35) ein mit einer Anzeigevorrichtung versehenes Druckmeß-Gerät (53, 54) vorgesehen ist, wobei vorzugsweise zwei Manometer nebeneinander an einer Außen-Wand (15) des Grund-Gehäuses (6) angeordnet sind.

13. Filtergerät nach einem der vorhergehenden Ansprüche, dadurch gekennzeichnet, daß mindestens ein entleerbares Öl-Abscheidegefäß (48) für die Schmutzluft vorgesehen ist, das im wesentlichen als Abscheidewanne unterhalb einer mindestens einen platten- bzw. kassettenförmig aufrecht stehenden Filter (36) aufweisenden ersten Filtereinheit (4) im unteren Bereich eines Gehäuseteiles (35) angeordnet ist.

14. Filtergerät nach einem der vorhergehenden Ansprüche, dadurch gekennzeichnet, daß die Einlaßseite (40) eines im Strömungsweg ersten Flächen-Filters (39) bzw. eines Elektro-Filters (36) in einer ihrer Flächengröße etwa entsprechenden Verteilerkammer (41) liegt, in weiche die Schmutzluft in einer Richtung abweichend von der Richtung etwa rechtwinklig gegen die Einlaßseite (40) dieses Filters (39) eintritt, wobei vorzugsweise die Schmutzluft-Saugöffnung (44) an einer quer zur Einlaßseite (40) dieses Filters (39) liegenden Gehäuse-Wand (43), wie der oberen Gehäuse-Wand (43), des Gehäuseteiles (35) mit Abstand von der Verteilerkammer (41) vorgesehen ist.

15. Filtergerät nach einem der vorhergehenden Ansprüche, dadurch gekennzeichnet, daß eine Schmutzluft-Saugöffnung durch eine zu öffnende Gehäuseseite, insbesondere die der Einlaßseite (40) des im Strömungsweg ersten Filters (39) zugehörige Gehäuseseite, gebildet ist, wobei vorzugsweise diese Seite durch eine zu einer Absaughaube (52) aufklappbare Gehäuse-Wand (42) verschließbar und durch den Gehäuseteil (35) der Filtereinheit (4) gebildet ist.

## Claims

1. Filter apparatus for particle-containing contaminated air, particularly smoke-containing contaminated air at workplaces, with a basic casing (6), a contaminated air suction opening (44) and an external exhaust air outlet (33) for the filtered air connected thereto via a flow path, whilst interposing an exhaust fan (8) having an inlet (13) and an outlet (14), whilst between the suction opening (44) and the exhaust air outlet (33) is provided at least one flat filter (39,38) and at least one further filter (3) downstream of the flat filter (39,38), characterized in that the downstream filter (3) is constructed as a cartridge filter (3) with a plurality of parallel-connected filter cartridges (26) and has a bottom inlet (24), which is located on the top of the basic casing (6), filtrate contamination more rapidly clogging a flat filter (38) than the cartridge filter (3).

2. Filter apparatus according to claim 1, characterized in that the cartridge filter (3) substantially covers the top of the basic casing (6) and this side of the basic casing (6) associated with the inlet of the cartridge filter (3) is open over substantially its entire width and is covered by a base plate (23) of a cartridge filter casing (22), which has a central filter cartridge inlet (24) for each of the filter cartridges (26) juxtaposed int he same plane in a grid pattern.

3. Filter apparatus according to claims 1 or 2, characterized in that the sleeve-like filter cartridges (26) of the cartridge filter (3) open at both ends have their end faces secured in a centred manner between two plates (23,29), whereof one plate has filter cartridge inlet ports (24) defined by plug flanges (25) and the opposite plate is constructed as a closure plate (29) for the associated open sleeve end of filter cartridges (26) and that preferably said two plates (23,29) are the outer wall of the cartridge filter casing (22), whose walls (32) at right angles thereto have the exhaust air outlet (33) in the form of a exhaust air outlet ports, such as slots and the like.

4. Filter apparatus according to one of the preceding claims, characterized in that between the outlet (14) of the exhaust fan (8) and the cartridge filter (3) positioned downstream of the same is provided a stabilizing chamber (7) in which is located the fan (8), a suction duct (18) being passed from the inlet (13) of the exhaust fan (8) to a facing inlet wall (17) and through the same out of the basic casing (6) and the exhaust fan (8) with its tangential outlet (14) formed by at least one outlet port in a fan casing (12) issues directly into the surrounding basic casing (6).

5. Filter apparatus according to one of the preceding claims, characterized in that downstream of the cartridge filter (3) is provided at least one afterfilter (34), such as a flat activated carbon filter, which is preferably located as an end filter adjacent to the filter cartridges (26) immediately on the inside of the outer wall (32) of the cartridge filter casing (22) having the spent air outlet ports.

6. Filter apparatus according to one of the preceding claims, characterized in that at least one of the flat filters (38b) is located between the outlet (14b) of the exhaust fan (8b) and the cartridge filter (3b) roughly parallel to its inlet side and that at least one device (53b,54b), such as a signal device, is provided for monitoring the pressure in the flow path directly upstream and/or downstream of the flat filter (38b).

7. Filter apparatus according to one of the preceding claims, characterized in that it has an electrostatic filter (36) and a following, mechanical follow-up filter (3) with a limited flow resistance in the clean state and with a flow resistance increasing with contamination and that preferably a device, such as a signal device, is provided for monitoring the pressure in the flow path upstream of the cartridge filter (3).

8. Filter apparatus according to claim 7, characterized in that between the electrostatic filter (36) and the follow-up filter is provided a test filter, e.g. formed by a flat filter (38) and having a low flow resistance in the clean state and increasing flow resistance in the case of the saturation of the electrostatic filter (36), as well as a device (53), such as a signal device, for monitoring the pressure in the flow path upstream of the test filter.

9. Filter apparatus according to one of the claims 4 to 8, characterized in that the intake duct (18) of the exhaust fan (8) has a suction funnel (20) widened to the surface size of a test or flat filter (39,38) and connected to the inside of the inlet wall (17) and adjacent to and/or parallel to its funnel opening (21) is provided the inlet-side test or flat filter (38).

10. Filter apparatus according to one of the preceding claims, characterized in that on the inlet side of the exhaust fan (3), at least one flat filter (39,38) or electrostatic filter (36) is adjacent to and/or between the inlet (13) of the fan (8) and the contaminated air suction port (44).

11. Filter apparatus according to one of the preceding claims, characterized in that a flat filter (38) in the form of an inlet-side test filter, of a filter unit (4) at least having the said filter is located in a casing part (35) having the dirty air suction port (44) said casing part in particular being combined with the basic casing (6) and is exclusively flow-connected by the inlet-side test filter and/or is connected to an upright outer wall (17) of the casing (6) with approximately the same associated cross-section and in particular on both sides of the filter unit (4) is provided in each case at least one inlet-side test or flat filter (39,38).

12. Filter apparatus according to one of the preceding claims, characterized in that for the basic casing (6) or for a further casing part (35) receiving a filter unit (4) is provided a pressure measuring device (53,54) and preferably two manometers are juxtaposed on one outer wall (15) of the basic casing (6).

13. Filter apparatus according to one of the preceding claims, characterized in that there is at least one emptyable oil seperating vessel (48) for the contaminated air and which is substantially located as a seperating trough below a first filter unit (4) having at least one plate-like or cassette-like, upright filter (36) in the lower area of a casing part (35).

14. Filter apparatus according to one of the preceding claims, characterized in that the inlet side (40) of a first flat filter (39) or an electrostatic filter (36) in the flow path is located in a distributing chamber (41) roughly corresponding to its surface size and into which the dirty air enters in a direction diverging from the direction approximately at right angles against the inlet side (40) of the said filter (39) and preferably the dirty air suction port (44) is located on a casing wall (43) at right angles to the inlet side (40) of said filter (39), such as the upper casing wall (43) of casing path (35) and at a distance from the distributing chamber (41).

15. Filter apparatus according to one of the preceding claims, characterized in that a dirty air suction port is formed by a casing side to be opened, particularly the casing side associated with the inlet side (40) of the first filter (39) in the flow path and preferably said side is formed by a casing wall (42) hinged to an exhaust hood (52) and by the casing part (35) of the filter unit (4).

**Revendications**

1. Appareil de filtrage d'air pollué contenant des particules, en particulier d'air pollué contenant de la fumée sur des postes de travail, comprenant un carter de base (6), une ouverture d'aspiration de l'air pollué (44) et une sortie d'air (33), destinée à l'air filtré et conduisant vers l'extérieur, qui est reliée à celle-ci par un trajet d'écoulement avec interposition d'un ventilateur d'aspiration (8) comprenant une entrée (13) et une sortie (14), cependant qu'il est prévu, entre l'ouverture d'aspiration (44) et la sortie d'air (33), un filtre plan (39, 38) et au moins un autre filtre (3) monté en aval du filtre plan (39, 38), caractérisé par le fait que le filtre monté en aval (3) est réalisé sous la forme d'un filtre à cartouches (3) comprenant une pluralité de cartouches de filtrage (26) montées en parallèle, et qu'il comporte une entrée (24) située du côté du fond qui est prévue sur un côté supérieur du carter de base (6), un filtre plan (38) étant conformé de façon à être encrassé plus vite par les salissures filtrées que le filtre à cartouches (3).

2. Appareil de filtrage selon la revendication 1, caractérisé par le fait que le filtre à cartouches (3) est disposé de manière à recouvrir pour l'essentiel le côté supérieur du carter de base (6), et que ce côté du carter de base (6) qui correspond à l'entrée du filtre à cartouches (3) est ouvert pour l'essentiel sur toute son étendue et recouvert d'une plaque de fond (23) d'un carter de filtre à cartouches (22) qui comporte une ouverture centrale (24) d'entrée des cartouches de filtrage pour chacune des cartouches de filtrage (26) qui sont disposées les unes à côté des autres dans un même plan selon une grille.

3. Appareil de filtrage selon la revendication 1 ou 2, caractérisé par le fait que les cartouches de filtrage (26) du filtre à cartouches (3) sont en forme de manchons et ouvertes des deux côtés, et qu'elles sont serrées de manière centrée par leurs surfaces frontales entre deux plaques (23, 29) dont l'une comporte des ouvertures d'entrée (24) des cartouches de filtrage délimitées par des collets à emboîtement (25) et dont celle qui lui est opposée est réalisée sous la forme d'une plaque de fermeture (29) destinée aux extrémités ouvertes associées des cartouches de filtrage (26), cependant que ces deux plaques (23, 29) sont de préférence des parois extérieures du carter (22) du filtre à cartouches dont les parois (32) situées transversalement par rapport à celles-ci comportent la sortie d'air (33) sous la forme d'ouvertures de sortie d'air comme des fentes ou similaires.

4. Appareil de filtrage selon l'une des revendications précédentes, caractérisé par le fait qu'il est prévu, entre la sortie (14) du ventilateur d'aspiration (8) et le filtre à cartouches (3) monté en aval de celui-ci, une chambre de stabilisation (7) dans laquelle est disposé le ventilateur d'aspiration (8), cependant qu'un canal d'aspiration (18) s'étend de l'entrée (13) du ventilateur d'aspiration (8) jusqu'à une paroi d'entrée (17) opposée, ainsi qu'à travers celle-ci hors du carter de base (6), et que le ventilateur d'aspiration (8), par sa sortie tangentielle (14) formée par au moins une ouverture de sortie ménagée dans un carter de ventilateur (12), débouche directement dans le carter de base (6) qui l'entoure.

5. Appareil de filtrage selon l'une des revendications précédentes, caractérisé par le fait qu'au moins un filtre supplémentaire (34), comme un filtre plat à charbon actif, est monté en aval du filtre à cartouches (3), et qu'il est disposé, de préférence comme filtre final, au voisinage des cartouches de filtrage (26) et directement sur le côté intérieur de la paroi extérieure correspondante (32) du carter (22) du filtre à cartouches qui comporte les ouvertures de sortie d'air.

6. Appareil de filtrage selon l'une des revendications précédentes, caractérisé par le fait que l'un au moins des filtres plats (38b) est situé entre la sortie (14b) du ventilateur d'aspiration (8b) et le filtre à cartouches (3b), de manière à peu près parallèle au côté d'entrée de celui-ci, et par le fait qu'il est prévu au moins un appareil (53b, 54b), comme un appareil à signaux, destiné à surveiller la pression dans le trajet de l'écoulement, immédiatement avant et/ou après le filtre plat (38b).

7. Appareil de filtrage selon l'une des revendications précédentes, caractérisé par le fait qu'il comprend au moins un filtre électrostatique (36) et le filtre à cartouches (3) qui sert de filtre mécanique suivant, qui est monté en aval du filtre électrostatique (36), dont la résistance de passage à l'état propre est faible et dont la résistance de passage augmente avec l'encrassement, et par le fait qu'il est prévu de préférence au moins un appareil (54), comme un appareil à signaux, pour surveiller la pression dans le trajet de l'écoulement avant le filtre à cartouches (3).

8. Appareil de filtrage selon la revendication 7, caractérisé par le fait qu'un filtre d'essai est disposé entre le filtre électrostatique (36) et le filtre suivant et qu'il est constitué par exemple par un filtre plat (38) dont la résistance de passage à l'état propre est faible et dont la résistance de passage augmente fortement dans le cas d'une saturation du filtre électrostatique (36), et qu'il est également prévu un appareil (53), comme un appareil à signaux, pour surveiller la pression dans le trajet de l'écoulement avant le filtre d'essai.

9. Appareil de filtrage selon l'une des revendications 4 à 8, caractérisé par le fait que le canal d'aspiration (18) du ventilateur d'aspiration (8) comporte un entonnoir d'aspiration (20) qui s'élargit dans la direction de la paroi d'entrée (17), à peu près jusqu'à la dimension de la surface d'un filtre d'essai ou d'un filtre plan (39, 38), respectivement, et qui se raccorde au côté intérieur de la paroi d'entrée (17), le filtre d'essai ou le filtre plan (38), respectivement, qui est situé du côté de l'entrée se trouvant au voisinage de l'ouverture (21) de cet entonnoir et/ou parallèlement à celle-ci.

10. Appareil de filtrage selon l'une des revendications précédentes, caractérisé par le fait qu'au moins un filtre plan (39, 38) ou un filtre électrostatique (36), respectivement, est disposé du côté de l'entrée du ventilateur d'aspiration (8) au voisinage de et/ou entre l'entrée (13) du ventilateur d'aspiration (8) et l'ouverture d'aspiration de l'air pollué (44).

11. Appareil de filtrage selon l'une des revendications précédentes, caractérisé par le fait qu'un filtre plan (38), lequel est prévu sous la forme d'un filtre d'essai situé du côté de l'entrée et appartient à une unité de filtrage (4) comprenant au moins ce filtre, est disposé dans une partie de carter (35) qui comporte l'ouverture d'aspiration de l'air pollué (44), qui est assemblée en particulier au carter de base (6), qui est reliée exclusivement par le filtre d'essai situé du côté de l'entrée en ce qui concerne l'écoulement et/ou qui se raccorde à une paroi extérieure verticale (17) du carter de base (6) par une surface transversale associée à peu près égale, cependant que, en particulier sur les deux côtés de l'unité de filtrage (4), est disposé à chaque fois au moins un filtre d'essai ou un filtre plan (39, 38), respectivement, qui est situé du côté de l'entrée.

12. Appareil de filtrage selon l'une des revendications précédentes, caractérisé par le fait qu'il est prévu, pour le carter de base (6), ou, respectivement, pour une autre partie de carter (35) qui reçoit une unité de filtrage (4), un appareil de mesure des pressions (53, 54) muni d'un dispositif indicateur, deux manomètres étant disposés de préférence l'un à côté de l'autre sur une paroi extérieure (15) du carter de base (6).

13. Appareil de filtrage selon l'une des revendications précédentes, caractérisé par le fait qu'il est prévu pour l'air pollué au moins un récipient de séparation de l'huile (48) qui peut être vidé et qui, sous la forme d'une cuvette de séparation, est disposé pour l'essentiel au-dessous d'une première unité de filtrage (4) comportant au moins un filtre (36) posé de chant en forme de plaque ou de cassette, respectivement, dans la région inférieure d'une partie de carter (35).

14. Appareil de filtrage selon l'une des revendications précédentes, caractérisé par le fait que le côté de l'entrée (40) d'un filtre plan (39) qui est le premier sur le trajet de l'écoulement ou d'un filtre électrostatique (36), respectivement, est disposé dans une chambre de répartition (41) qui correspond à peu près à ses dimensions en surface et dans laquelle l'air pollué pénètre dans une direction qui diffère de la direction située à peu près à angle droit par rapport au côté d'entrée (40) de ce filtre (39), cependant que l'ouverture d'aspiration de l'air pollué (44) est prévue de préférence, à distance de la chambre de répartition (41), sur une paroi de carter (43) de la partie de carter (35), comme sa paroi de carter supérieure (43), qui est située transversalement par rapport au côté de l'entrée (40) de ce filtre (39).

15. Appareil de filtrage selon l'une des revendications précédentes, caractérisé par le fait qu'une ouverture d'aspiration de l'air pollué est constituée par un côté ouvrant du carter, en particulier par le côté du carter appartenant au côté (40) de l'entrée du filtre (39) qui est le premier sur le trajet de l'écoulement, cependant que, de préférence, ce côté peut être fermé par une paroi de carter (42) qui peut être basculée vers le haut pour former un capot d'aspiration (52), et qu'il est constitué par la partie de carter (35) de l'unité de filtrage (4).

Fig.1

Fig.2

Fig.3

Fig. 4

Fig.5

Fig.6

Fig.7